# EUROPEAN PATENT APPLICATION

(11) **EP 1 095 722 A2**
(43) Date of publication of application: **02.05.2001**
(21) Application number: 00309317.6
(22) Date of filing: 23.10.2000
(51) Int. Cl.: B23B 31/171

(54) **Stationary chuck**

(30) Priority: 26.10.1999 GB 9925230
(71) Applicant: Richard R. Leader Ltd., Chertsey, Surrey KT16 9AH (GB)
(72) Inventor: Leader, John Michael, East Clandon, Surrey GU4 7SF (GB)
(74) Representative: Maddison, Victoria Jayne

(57) **Abstract**

A novel stationary comprises top jaws 21 each carried by base jaw 7 which in turn is carried on a chuck body 2 which sits on the chuck base 3. In the base 3 is a gearing system comprising a pinion 13 which meshes with a cam gear 6. The cam gear 6 carries slots that accept load pins 4 which are fixed to and carried by the base jaws 7. The load pins 4 mate with recesses in the under surface of the top jaws 21. The pinion 13 has a recess in its upper surface for receiving a turn key to turn the pinion and activate the gearing system. To close the chuck, a turn key is inserted into the pinion 13 and the pinion is rotated. Meshing cam gear 6 is caused to rotate simultaneously. As the cam gear rotates, the load pin travels in the slot 31 between the radially outermost portion of the slot and the radially innermost portion of the slot. The load pin 4 which is constrained from moving in an arcuate motion is forced to travel radially inward of the front plate 1 of the chuck carrying with it the top jaw 21. The chuck provides a compact, efficient and effective alternative to conventional scroll operated chucks.

## Description

This invention relates to a stationary chuck for holding work pieces in position during machining operations.

Manual chucks are well known in the engineering industries. Generally, these chucks comprise two or more sliding jaws located in slots on a sturdy base. The jaws are operable by mechanical means to close around the work piece and lock the piece into position for machining. By reversing the mechanical means, the jaws can be separated to release the work piece. Such chucks were originally developed for rotary use on lathes but more recently have been used in stationary applications.

Conventionally, such a chuck comprises a circular body, typically of cast iron or steel, and has 2 or 3 radial slots on its front face in which the jaws slide. The bottom faces of the jaws have square section teeth which mesh with a scroll cut in the top face of a circular plate positioned beneath the jaws. The scroll cut face plate has a ring of teeth cut at an angle, say of 30 degrees, on the under side and extending to the periphery of the plate. These teeth mesh with the teeth of a pinion set into the chuck body in a direction normal to the axis of rotation of the scroll plate. The pinion has a recess for a key permitting the scroll to be rotated in a forward and reverse direction closing or opening the jaws in a radial direction across the front face of the chuck.

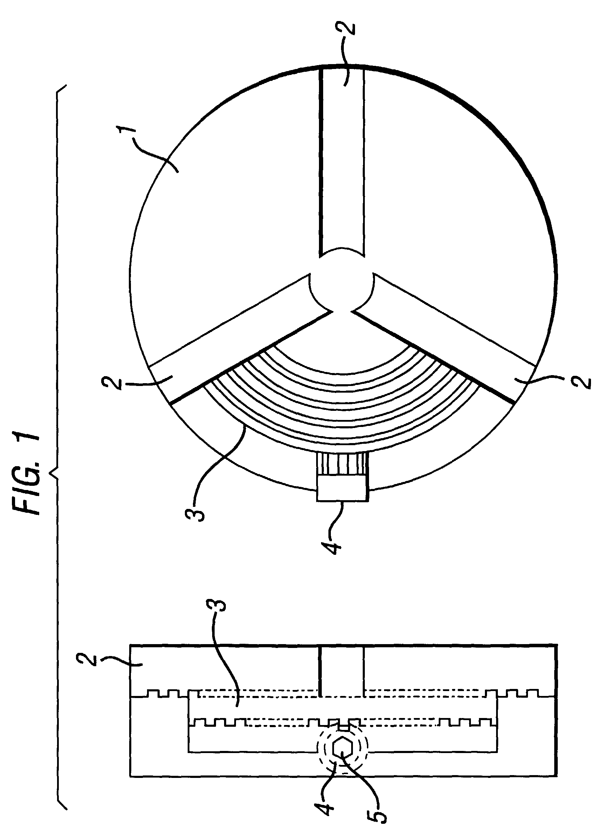

An example of such a prior art arrangement is illustrated in Figure 1.

Whilst such designs are accepted as an industry standard and perform particularly well in lathe applications, when used in static applications they suffer from a number of drawbacks.

Firstly, such chucks are generally designed for universal use and in order to provide the desired flexibility, the jaws need to be able to move across the full width of the chuck face and in so doing expose the scroll cut plate to metal chips and chaff. These chips can accumulate over time and interfere with the smooth moving of the jaws. Often, an accumulation of such chips will result in jamming and failure of the chuck due to excessive wear on the scroll and jaw teeth.

The scroll arrangement provides a linear relationship between the rate of rotation of the scroll and the consequent radial movement of the jaw across the front plate. Whilst this feature is practical for minor adjustments of jaw teeth, it makes the chuck slow to operate if large movements of the jaw are required to receive or remove the work piece. This can be particularly disadvantageous in large volume manufacture where speed of changeover between work pieces is of importance.

The need to position the pinion beneath the scroll plate and normal to it necessarily adds a certain depth to the chuck. Whilst not generally a problem in lathe applications, this can be disadvantageous in other machining operations where the work piece is seated beneath the machine tool. Often these vertically operating machines have limited vertical movement leaving little space between the chuck body and the machine to accommodate and manipulate work pieces and machine tools. Thus it is desirable to minimise the depth of the chuck.

The pinion is necessarily arranged to be accessed from the side of the chuck body. Whilst this is again advantageous in lathe applications, where the front plane of the chuck is generally vertical and the sides mounted free of obstructions, in static applications where the chucks are placed on a horizontal work surface, side access to the pinion becomes far less convenient. Where multiples of work pieces are required to be simultaneously machined, the side access to the pinion also limits the number of chucks which can be consecutively aligned and the closeness with which they can be aligned on a common base.

Thus it is an object of the present invention to provide a simple and compact yet effective chuck design which alleviates at least some of the problems associated with the prior art.

In accordance with the present invention there is provided a stationary chuck comprising;
at least two jaws for gripping a workpiece, the jaws being slideably mounted in guide slots arranged radially of a central point on a chuck body and means for moving the jaws radially towards and away from the central point,
   wherein the means for moving the jaws comprises;
a cam plate rotatably mounted on the chuck body beneath the jaws, the cam plate being provided with a slot for each jaw of the chuck, the slots being arranged radially symmetrically of the central point of the chuck body, and a drive pin for each jaw, each drive pin being slideably mounted in a slot and communicating with a jaw, the arrangement of the slots being such that rotational movement of the cam plate about the central point causes movement of the drive pin in a radial direction which in turn moves the jaws of the chuck in a radial direction across the upper body of the chuck.

Conveniently, the slots may be arcuate with a changing radius of curvature, this provides the smooth radial movement of the jaws during driving of the drive pin. A change in the radius of around 1 mm over the length of the arc provides adequate radial jaw grip for a standard sized chuck. Preferably an end portion of the radial slot will have a greater change of radius to provide greater and quicker jaw movement to facilitate loading and unloading of the work piece.

The top jaws of the chuck may be removable and replaceable to allow the chuck to be adapted to receive different sized work pieces and different machining operations. Whilst the cam plate may be operated by any suitable mechanical or automated means, one particularly convenient arrangement incorporates a gear wheel which communicates with the gear teeth by which the cam plate is driven to provide a mechanical advantage when urging the drive pin and jaws across the chuck body. The gear wheel may mesh with the cam plate directly or may mesh with a second gear wheel which is fastened or bonded to the cam plate. Preferably in this arrangement the gear wheel is operatable by insertion of a turn key or the like in a complimentary central recess of the gear wheel, the turn key being insertable from the upper surface of the chuck. This compact arrangement allows a multitude of chucks to be aligned adjacent each other in matrices greater than three units deep providing for a more compact, high volume and efficient manufacturing line.

Preferably the chuck will comprise three jaws, this provides for better centring of the work piece and superior gripping over a two jaw arrangement whilst maintaining a relatively small number of component parts and thus minimising the costs and complexity of the chuck design.

The chuck's components can be made of any suitable materials conventionally used in chuck manufacture, including cast iron or steel.

It can be seen the arrangement described can be made to be smaller in depth than the scroll type arrangements previously described thus providing for greater manoeuverability of work pieces and machine tools in the space provided between the upper surface of the chuck and the operating arm of the machine. The arrangement is also compact and is operated from the front surface, there is no need for access to the side surfaces of the chuck body, thus chucks made according to this embodiment can be aligned in matrices with their side edges in close communication with those of adjacent chucks.

The chucks of the present invention with their associated advantages lend themselves to use in static applications for high volume manufacture. They are less prone than conventional arrangements to wear or breakage due to the accumulation of metal chips or chaff and can even be provided with barrier protection from any chips or chaff resulting from the machining operation.

As the top jaws are required only to communicate with the load pin and radial guides they are easily removable and replaceable. Thus it becomes more practical to provide dedicated jaws for certain types of work piece providing better and more flexible holding during machining processes.

Chucks made according to the present invention have been found to have up to 50% better gripping power than conventional designs and are conveniently compact and simple to operate either manually or automatically.

For the purposes of exemplification, the invention will now be further described with reference to the Figures, in which;
Figure 1 shows a schematic of a prior art chuck which incorporates a scroll plate and pinion arrangement for moving the jaws;
Figure 2 shows one embodiment of the present invention in vertical cross section through one jaw;

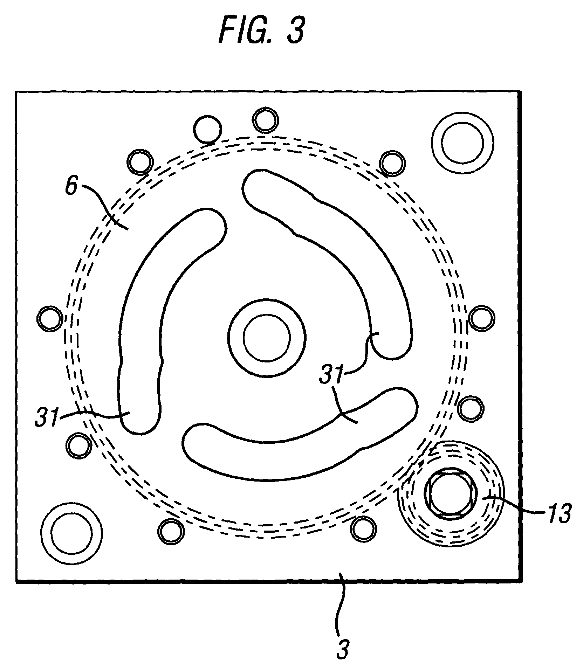

Figure 3 shows an embodiment of the present invention in horizontal cross section including detail of the cam plate.

As can be seen from Figure 1, a conventional chuck arrangement comprises a chuck body 1 on the upper surface of which are located two or more jaws 2. On the undersurface of the jaws 2 is a series of castellations which mesh with the grooves in the front surface of the scroll plate 3. On the underside of the scroll plate are provided angled teeth which extend to the periphery of the underside of the scroll plate where they mesh with the teeth of pinion 4 which is aligned perpendicularly to the axis of rotation of the scroll plate. Pinion 4 has a recess 5 for receiving a key.

On insertion of a key into the recess 5, the pinion 4 is rotated. As the teeth of the pinion mesh with those on the under surface of the scroll plate 3, the scroll plate rotates. The castellations on the undersurface of the jaws 2 are carried in the rotating grooves of the scroll and are drawn radially across the front surface of the cam body 1. Rotation of the pinion in a reverse direction causes each component to move in a reverse direction, thus the jaws can be opened, closed and adjusted to suit the work piece to be machined.

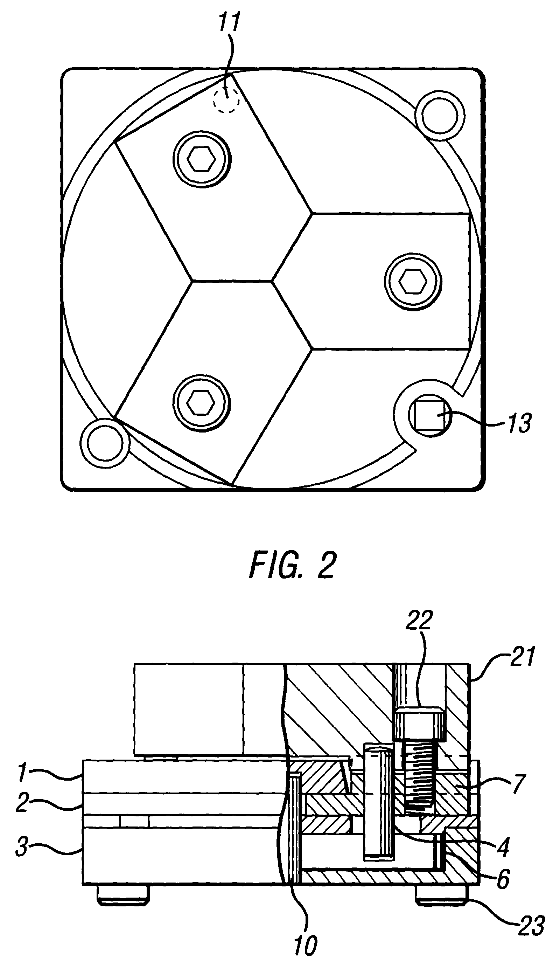

In Figure 2 an embodiment of the present invention comprises three top jaws 21 each carried by base jaw 7 which in turn is carried on a chuck body 2 which sits on the chuck base 3. In the base 3 is a gearing system comprising a pinion 13 which meshes with a cam gear 6. The cam gear 6 carries a load pin 4 which passes through a slot 31 in cam gear 6 and mates with a recess in the under surface of the top jaw 21. The pinion 13 has a recess in its upper surface for receiving a turn key to turn the pinion and activate the gearing system.

To close the chuck, a turn key is inserted into the pinion 13 and the pinion is rotated. Meshing cam gear 6 is caused to rotate simultaneously. As the cam gear rotates, the load pin travels in the slot 31 between the radially outermost portion of the slot and the radially innermost portion of the slot. The load pin 4 which is constrained from moving in an arcuate motion is forced to travel radially inward of the front plate 1 of the chuck carrying with it the top jaw 21. To open the chuck, the pinion is rotated in a reverse direction causing the load pin to travel in the opposing radial direction thus drawing the top jaws apart.

In the particular embodiment described, the slots comprise two adjoined arcuate portions, the first portion has a radial change of around 4mm over about 20 degrees and the second portion has a radial change of about 1mm over about 70 degrees. The first portion drives the pin and jaw quickly and easily across the jaw surface allowing quick locating of a work piece and quick and easy removal of the finished piece. The second portion drives the pin in smaller increments to permit better control and greater mechanical advantage in gripping the piece.

It is to be understood that the foregoing represents just one embodiment of the present invention, others of which will occur to the skilled reader without departing from the true scope of the invention as defined in the appended claims.

## Claims

1. A stationary chuck comprising;
at least two jaws (21) for gripping a workpiece, the jaws (2) being slideably mounted in guide slots arranged radially of a central point on a chuck body and means for moving the jaws radially towards and away from the central point,
characterised in that the means for moving the jaws comprises;
a cam plate (6) rotatably mounted on the cam body (2) beneath the jaws, the cam plate (6) being provided with a slot (31) for each jaw of the chuck, the slots (31) being arranged radially symmetrically of the central point of the chuck body, and a drive pin(4) in each jaw (31), each drive pin being slideably mounted in a slot and communicating with a jaw, the arrangement of the slots being such that rotational movement of the cam plate (6) about the central point causes movement of the drive pin (4) in a radial direction which in turn moves the jaws (31) of the chuck in a radial direction across the upper body (1) of the chuck.

2. A stationary chuck as claimed in claim 1 characterised in that the slots (31) are arcuate with a changing radius of curvature.

3. A stationary chuck as claimed in claim 2 characterised in that the slots comprise a first portion and a second portion, the first portion having a more rapidly changing radius of curvature than the second portion.

4. A stationary chuck as claimed in claim 3 characterised in that the change in the radius of curvature of the first portion is about 4mm over 20 degrees.

5. A stationary chuck as claimed in claim 3 or claim 4 characterised in that the change in radius of curvature of the second portion is about 1mm over about 70 degrees.

6. A stationary chuck as claimed in any preceding claim characterised in that the jaws are removable and replaceable to allow the chuck to be adapted to receive different sized work pieces and different machining operations.

7. A stationary chuck as claimed in an preceding claim characterised in that the cam plate is rotated by means of a gearing system.

8. A stationary chuck as claimed in claim 7 characterised in that the gearing system is operated from the upper surface of the chuck.

9. A stationary chuck as claimed in any preceding claim characterised in that the chuck comprises three jaws.
